# EUROPÄISCHE PATENTSCHRIFT

(11) **EP 1 389 503 B1**
(45) Veröffentlichungstag und Bekanntmachung des Hinweises auf die Patenterteilung: **09.08.2006**
(21) Anmeldenummer: 03450185.8
(22) Anmeldetag: 11.08.2003
(51) Int. Cl.: B23D 65/00, B23D 61/14, B23D 61/12

(54) **Vormaterial für Sägeblätter oder Sägebänder**
Base material for saw blades or band saws
Produit de départ pour des lames de scie ou des scies à ruban

(30) Priorität: 12.08.2002 AT 12192002
(43) Veröffentlichungstag der Anmeldung: 18.02.2004
(73) Patentinhaber: BÖHLER-UDDEHOLM Precision Strip GmbH & Co KG, 3333 Böhlerwerk (AT)
(72) Erfinder: Tichler, Gerhard, 3333 Böhlerwerk (AT); Innitzer, Gregor, Dipl. Ing., 1030 Wien (AT)
(74) Vertreter: Wildhack, Helmut

(56) Entgegenhaltungen:
- EP-A- 0 865 856
- DE-A- 2 316 373
- DE-A- 10 057 749
- US-A- 3 104 562
- PATENT ABSTRACTS OF JAPAN vol. 013, no. 204 (M-825), 15. Mai 1989 (1989-05-15) -& JP 01 027807 A (SANWA DAIYAMONDO KOGYO KK), 30. Januar 1989 (1989-01-30)

## Beschreibung

Die Erfindung betrifft ein Vormaterial für eine Herstellung eines Sägebandes oder Sägeblattes, gemäß dem oberbegriff des Anspruchs 1

Weiters umfasst die Erfindung ein Verfahren zur Herstellung von Vormaterial für ein Sägeblatt oder Sägeband gemäß dem oberbegriff des Anspruchs 4.

Ein solches Vormaterial und ein solches Verfahren sind aus der US 3104562 A bekannt.

Als Vormaterial zur Fertigung von Sägen mit harten und verschleißfesten Zahnspitzenbereichen wird im Allgemeinen ein Verbundstahlblatt oder Verbundstahlband eingesetzt, welches im Querschnitt auf der Schmalseite eines elastisch biegbaren Säge- oder Trägerteiles einen schmalen Teil aus Werkzeugstahl aufweist. Die Teile sind miteinander metallisch durch zumeist zusatzfreie Schmelzschweißung verbunden.

Hergestellt wird dieses Vormaterial, das in der Fachwelt Bi-Metallband oder Bi-Metallblatt genannt wird, durch ein Verbindungsschweißen der Bänder oder Teile in Längsrichtung, vorzugsweise mittels Elektronenstrahl- oder Laserstrahlschweißverfahrens.

Die Herstellung der Säge aus dem Vormaterial erfolgt im Wesentlichen derart, dass aus dem Bandbereich mit der Werkzeugstahlauflage ein Zahnprofil bis in den Trägerteil eingebracht wird, so dass lediglich die Spitzenbereiche der Zähne aus Werkzeugstahl oder Schneidwerkstoff bestehen, welche Bereiche letztlich durch thermische Vergütung gehärtet werden können.

Es ist auch bekannt, ein sogenanntes Tri-Metallband als Vormaterial für Sägen zu fertigen, wobei beidseitig auf einem Trägerteil jeweils im Querschnitt stirnseitig Schneidstoffauflagen aufgeschweißt werden, wonach ein Spalten des Bandes in Längsrichtung und ein Einarbeiten der Zähne in die mit Werkzeugstahlmaterial versehene Bandseite erfolgen.

Die Vorteile eines Vormaterials, bei welchem das Trägerband durchgehend mit dem Schneidwerkstoffband verbunden bzw. verschweißt ist, sind darin zu sehen,dass die Verbindungsschweißung ohne Unterbrechung erstellt ist und weitestgehend keine Mängel aufweist. Auch bei einer Sägenzahnung mit unregelmäßigen Zahnabständen, was zur Vermeidung von Schwingungen einer Säge im praktischen Einsatz vorgesehen sein kann, ist diese Vormaterialausführung günstig einsetzbar.

Ein Aneinanderschweißen von Trägerband und Schneidwerkstoffband erfolgt, wie erwähnt, direkt, also schweißzusatzwerkstofffrei und ergibt nur dünne, durch den Schweißvorgang bewirkte wärmebeeinflusste Zonen. Weil nun über die gesamte Bandlänge eine Schmelzschweißverbindung erstellt wird, können jedoch insbesondere bei gröberen Bändern in nachteiliger Weise dünne spröde Martensitschichten und/oder Längenänderungen entstehen, die auch gegebenenfalls eine elastische Biegung des Bandes in Breitenrichtung bewirken. Dünne Sprödschichten können weiters bei einer unsachgemäßen Manipulation die Rissinitiation fördern und die Verbindung der Zahnspitzen der Säge destabilisieren. Vielfach wird zur sicheren Vermeidung von derartigen Problemen und einer Gefügekonditionierung wegen zumindest eine Glühung des Vormaterialbandes vorgesehen.

Bei einer Sägenfertigung aus einem Bi-Metall-Vormaterialblatt oder dergleichen Vormaterialband kann der Zwischenraum zwischen den Zähnen herausgeschliffen, ausgestanzt oder ausgefräst werden. In jedem Falle ist dabei der gesamte vergleichsweise harte Schneidwerkstoffbereich zwischen den Zahnspitzen abzutragen.

Ein Abtragen oder Ausbringen des Werkstoffes, insbesondere des Schneidwerkstoffteiles bei einer Erstellung der Arbeitszahnzwischenräume von einem Bi-Metallband oder Bi-Metallblattstapel beansprucht die Werkzeuge stark, so dass ein vermehrter Bearbeitungszeitaufwand und ein erhöhter Werkzeugverschleiß gegeben sind.

Aus der US-3,104,562 ist ein Verfahren bekannt geworden, mit welchem aus einem Band ein Sägeprofil ausgearbeitet und in die Zahnspitzenbereiche sphärische bzw. kugelförmige Vertiefungen eingebracht werden. In diese Ausnehmungen erfolgt ein Einschweißen von im Wesentlichen gleich sphärisch geformten Hartmetallteilen bzw. Kugeln. Nach einem Abschleifen des überständigen Hartmetalles weist der Sägezahn eine Zahnspitze aus Hartmetall auf, welche mittels einer sphärisch geformten Bindungsfläche mit dem Trägerzahn gefügt ist.

Die Erfindung will die Mängel beseitigen und stellt sich die Aufgabe, ein Vormaterial für eine Herstellung eines Sägeblattes oder Sägebandes mit Zahnspitzen aus hartem verschleißfestem Werkstoff zu schaffen, welches im Schweißbereich des Zahnspitzenanteiles geringere mechanische Spannungen und höchste Verbindungsgüte aufweist und geringeren Bearbeitungsaufwand sowie niedrigeren Werkzeugverschleiß bei einer Sägenfertigung erfordert.

Die Erfindung zielt auch auf ein Verfahren zur wirtschaftlichen Herstellung eines Vormaterials für ein Sägeblatt oder Sägeband mit harten, verschleißfesten Zahnspitzen bei verbesserter Güte desselben ab.

Die gestellte Aufgabe wird nach der Erfindung bei einem Vormaterial der eingangs genannten Art dadurch gelöst, dass das Vormaterial aus einem Stahlband gebildet ist, welches stirnseitig auf einer ebenen Basisfläche an jenen Stellen, die bei der daraus gefertigten Säge die Zahnspitzen bilden, Teile aus Schneidwerkstoff trägt und die Verbindung zwischen Stahlband und Schneidwerkstoffteilen als schweißzusatzwerkstofffreie Elektronenstrahl-Schweißung oder als Laser-Schweißung oder als Widerstands-Press-Schweißung gebildet ist.

Die Vorteile des erfindungsgemäßen Vormaterials sind im Wesentlichen darin zu sehen, dass an der Trägerbandschmalseite lediglich geringe Bereiche und zwar jene, die letztlich die Zahnspitze bilden, eine Schmelzschweißverbindung mit dem Schneidwerkstoffteil aufweisen. Dadurch können die Bandstabilität und die elastische Biegbarkeit verbessert werden, wobei Einsparungen an Schneidwerkstoff erreicht werden. Nach Meinung der Fachwelt können am Beginn einer Schweißnaht Verbindungsfehlstellen in erhöhtem Maße entstehen, was jedoch in überraschender Weise bei der Herstellung des erfindungsgemäßen Vormateriales nicht beobachtet wurde. Vielmehr wurde anhand von Biegewechsel-Festigkeits und metallografischen Untersuchungen eine wesentlich gesteigerte Verbindungsqualität der Schneidwerkstoffteile mit dem Trägermaterial festgestellt. Eine besonders hohe Güte des Vormaterials wird erreicht, wenn die Verbindung zwischen Stahlband oder Trägerteil und den Schneidwerkstoffteilen als Laser-Schweißung oder als Widerstands-Press-Schweißung gebildet ist.

Mit Vorteil besteht der Schneidwerkstoff aus Werkzeugstahl, insbesondere aus Schnellarbeitsstahl oder aus Hartmetall, weil damit die aus dem Vormaterial hergestellten Sägen besonders hohe Schneidleistungen erbringen.

Es kann im Hinblick auf eine Stabilisierung der Schneidstoffteile am Trägerband und eine besondere Verbindungsgüte betreffend bei der Herstellung des erfindungsgemäßen Vormaterials und letztlich der Sägezähne günstig sein, wenn die Teile aus Schneidwerkstoff zumindest teilweise in das Stahlband stirnseitig eingesenkt sind.

Besonders aus wirtschaftlicher Sicht kann es günstig sein, wenn die Breite des Stahlbandes oder Trägerbandes größer als 15 mm, vorzugsweise größer als 40 mm, ist.

Das weitere Ziel der Erfindung wird bei einem gattungsgemäßen Verfahren dadurch erreicht, dass an ein Stahlband stirnseitig an jenen Stellen, in welchen Bereichen beim Sägeblatt Zahnspitzen vorgesehen sind, Schneidwerkstoffteile spaltfrei angelegt und mittels Schweißung mit diesem verbunden werden, wobei die Verschweißung der Schneidstoffteile mit dem Stahlband zusatzwerkstofffrei mittels Elektronenstahl,-Laserstrahl- oder Widerstands-Press-Schweißung erfolgt.

Die mit der Erfindung erreichten Verfahrensvorteile sind im Wesentlichen darin zu sehen, dass eine hohe fertigungstechnische Flexibilität bei geringem Lagervolumen für die Schneidwerkstoffteile bei der Vormaterialfertigung erreicht werden kann. Darüberhinaus wird auf Grund des kleinflächigen Anlegens der Schneidteile eine höchstmögliche Sicherheit bei einer Verbindungsschweißung mit dem Trägerteil erreicht.

Fertigungstechnisch, aber auch im Hinblick auf eine höchstmögliche Genauigkeit der Positionierung der Schneidbereiche kann es günstig sein, wenn in das Stahlband stirnseitig Vertiefungen eingebracht werden, worauf ein Einbringen der Schneidwerkstoffteile in diese ein spaltfreies Anlegen derselben und eine Verschweißung mit dem Stahlband erfolgen.

Weil die Verschweißung der Schneidwerkstoffteile mit dem Stahlband mittels Elektronenstrahl-, Laserstrahl-oder Widerstands- Press- Schweißverfahrens erfolgt, kann einerseits eine sichere Verbindung und andererseits in besonders vorteilhafter Weise eine unmittelbare Steuerung des Schweißverfahrens erreicht werden.

Das Widerstands-Press-Schweissverfahren ist ein Fügeverfahren mit direktem Stromdurchgang durch den Anliegebereich des Schneidswerkstoffteiles am Trägerband.

Eine überragende Verbindungsgüte kann erstellt werden, wenn die Schneidwerkstoffteile aus Werkzeugstahl, vorzugsweise Schnellarbeitsstahl, insbesondere hochlegiertem Schnellarbeitsstahl, hergestellt nach einem pulvermetallurgischen Verfahren oder aus Hartmetall gebildet werden. Diese Gütesteigerung wirkt sich auch günstig bei einer Sägezahnfertigung und gegebenenfalls bei einer Wärmebehandlung der Rohsäge aus.

Im Sinne einer höchst wirtschaftlichen Herstellung von Sägen, welche eine unterschiedliche Zahnteilung aufweisen, kann es von Vorteil sein, wenn die Länge von stirnseitigen Vertiefungen im Stahlband und/oder die Länge der einzelnen Schneidwerkstoffteile und/oder deren gegenseitiger Abstand, mit welchem diese stirnseitig jeweils mit dem Stahlband verbunden werden, entsprechend dem vorgesehenen Zahnprofil der Säge vorgesehen wird (werden).

In einer Ausgestaltung des erfindungsgemäßen Verfahrens kann vorgesehen sein, dass ein Stahlband geführt und jeweils in Sequenz an vorgesehenen Stellen Schneidwerkstoffteile angelegt und mit diesen verschweißt oder in das Stahlband Vertiefungen eingebracht, in diese Schneidwerkstoffteile eingebracht und mit dem Band durch Schweißung verbunden werden. Derart, in einer sogenannten ungeteilten Erzeugungslinie, wirtschaftlich hergestelltes Vormaterial weist auch beachtliche Gütevorteile auf.

Im folgenden wird die Erfindung anhand von lediglich einen Ausführungsweg darstellenden Zeichnungen näher erläutert.
Es zeigt
Fig. 1 ein erfindungsgemäßes Vormaterial
Fig. 2 ein erfindungsgemäßes Vormaterial mit partiell vertieft in ein Trägerblatt eingesetzten Schneidwerkstoffteilen.

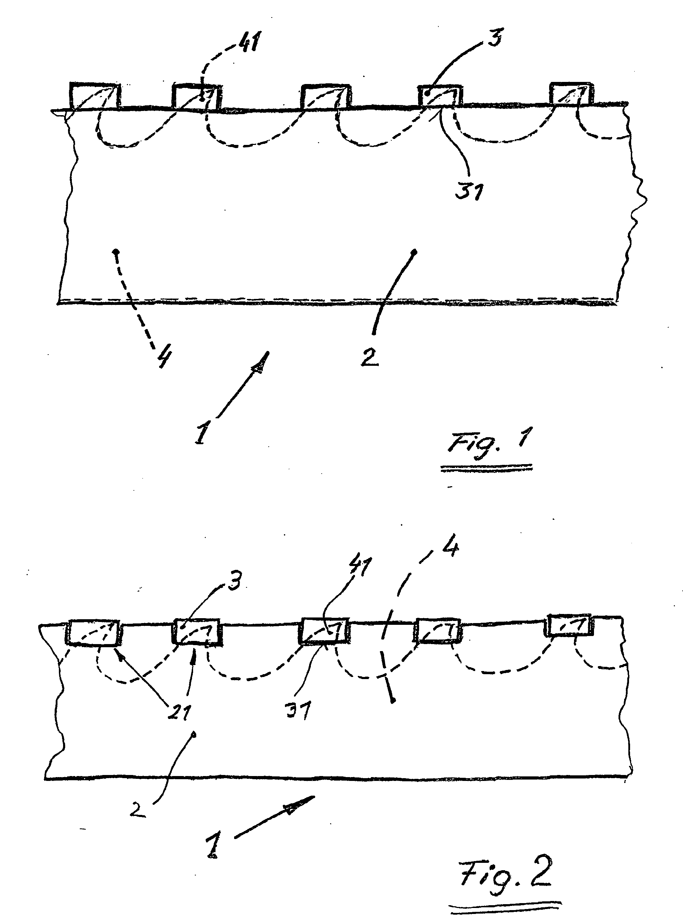

Ein Vormaterial 1, schematisch in Fig. 1 gezeigt, ist für eine Herstellung eines Sägeblattes 4 (strichliert dargestellt) vorgesehen, welches Sägeblatt Zähne mit Zahnspitzen 41 aus einem Werkzeugstahl aufweist. Dementsprechend trägt ein Stahlband 2 Teile 3 aus Schneidwerkstoff, im gegebenen Fall aus Werkzeugstahl, welche Teile 3 stirnseitig mittels einer Schweißverbindung 31 am Stahlband unlösbar festgemacht sind.

Aus Fig. 2 ist ein Vormaterial 1 mit in ein Stahlband oder Stahlblatt 2 eingebrachten Vertiefungen 21 schematisch dargestellt. In die Vertiefungen 21 ist jeweils ein Schneidwerkstoffteil 3 positioniert, welcher zumindest an dessen Basisfläche 31 eine Schmelzschweißverbindung aufweist. Eine aus diesem Vormaterial zu fertigende Säge ist wieder strichliert eingetragen, wobei eine übereinstimmende Lage von Schneidteilen 3 im Vormaterial 1 und den Zahnspitzen 41 der Säge 5 dargestellt ist.

## Patentansprüche

1. Vormaterial für eine Herstellung eines Sägeblattes oder Sägebandes aus zähfestem, elastischem Stahl, bei welchem die Sägezähne Zahnspitzenbereiche aus hartem, verschleißfestem Werkstoff aufweisen, **dadurch gekennzeichnet, dass** das Vormaterial (1) aus einem Stahlband (2) gebildet ist, welches stirnseitig auf einer ebenen Basisfläche (31) an jenen Stellen, die bei der daraus gefertigten Sägeblatt bzw. Bandsäge (4) die Zahnspitzen (41) bilden, Teile (3) aus Schneidwerkstoff trägt und die Verbindung (31) zwischen Stahlband (2) und Schneidwerkstoffteilen (3) als schweißzusatzwerkstofffreie Elektronenstrahl-Schweißung oder als Laser-Schweißung oder als Widerstands- Press-Schweißung gebildet ist.

2. Vormaterial nach Anspruch 1, **dadurch gekennzeichnet, dass** die Teile (3) aus Schneidwerkstoff zumindest teilweise in das Stahlband (2) stirnseitig eingesenkt sind.

3. Vormaterial nach einem der Ansprüche 1 oder 2, **dadurch gekennzeichnet, dass** die Breite des Stahlbandes (2) größer als 15 mm, vorzugsweise größer als 40 mm, ist.

4. Verfahren zur Herstellung von Vormaterial für ein Sägeblatt oder Sägeband, welches Sägezähne mit Zahnspitzenbereichen aus hartem, verschleißfestem Werkstoff aufweist, **dadurch gekennzeichnet, dass** an ein Stahlband stirnseitig an jenen Stellen, in welchen Bereichen beim Sägeblatt Zahnspitzen vorgesehen sind, Schneidwerkstoffteile spaltfrei angelegt und mittels Schweißung mit diesem verbunden werden, wobei die Verschweißung der Schneidwerkstoffteile mit dem Stahlband zusatzwerkstofffrei mittels Elektronenstrahl-, Laserstrahl- oder Widerstands-Press-Schweißung erfolgt.

5. Verfahren nach Anspruch 4, **dadurch gekennzeichnet, dass** in das Stahlband stirnseitig Vertiefungen eingebracht werden, worauf ein Einbringen der Schneidwerkstoffteile in diese ein spaltfreies Anlegen derselben und eine Verschweißung mit dem Stahlband erfolgen.

6. Verfahren nach einem der Ansprüche 4 oder 5, **dadurch gekennzeichnet, dass** die Länge von stirnseitigen Vertiefungen im Stahlband und/oder die Länge der einzelnen Schneidwerkstoffteile und/oder deren gegenseitiger Abstand, mit welchem diese stirnseitig jeweils mit dem Stahlband verbunden werden, entsprechend dem vorgesehenen Zahnprofil der Säge vorgesehen wird (werden).

7. Verfahren nach einem der Ansprüche 4 bis 6, **dadurch gekennzeichnet, dass** ein Stahlband geführt und jeweils in Sequenz an vorgesehenen Stellen Schneidwerkstoffteile angelegt und mit diesem verschweißt werden.

## Claims

1. Base material for the production of a saw blade or a band saw of a tenacious strong, elastic steel, wherein the saw teeth comprise regions of tooth tips of a hard, wear resistant material, **characterised in that** the base material (1) is formed of a steel band (2) which carries portions of cutting material (3) at the front side on a flat base surface (31) at those places, which form the tooth tips (41) in the saw blade or band saw (4) produced from it, and that the joint (31) between the steel band (2) and the portions of cutting material (3) is formed by electron beam welding, free of a welding filler, or by laser welding or by resistance press welding.

2. Base material according to claim 1, **characterised in that** the portions of cutting material (3) are at least partially sunk into the steel band (2) at the front side.

3. Base material according to any of claims 1 or 2, **characterised in that** the width of the steel band (2) is larger than 15 mm, preferably larger than 40 mm.

4. Process for the production of a base material for a saw blade or a band saw, which comprises saw teeth having tooth tip regions of a hard, wear resistant material, **characterised in that** portions of cutting material are applied without a gap to a steel band at that places, in which regions tooth tips are provided on the saw blade, and that they are joint to it by means of welding, welding of the portions of cutting material with the steel band being done without a welding filler by electron beam welding, laser beam welding or resistance press welding.

5. Process according to claim 4, **characterised in that** indentations are introduced into the steel band at the front side, after which portions of cutting material are inserted into them, they are applied to without any gap, and welding with the steel band is effected.

6. Process according to any of claims 4 or 5, **characterised in that** the length of indentations in the front side of the steel band and/or the length of the individual portions of cutting material and/or their mutual distance in which they are joint respectively to the front side with the steel band, is (are) formed in accordance with the tooth profile of the saw.

7. Process according to any of claims 4 to 6, **characterised in that** a steel band is guided and portions of cutting material are respectively applied in a sequence at the places provided and are welded to them.

## Revendications

1. Produit de départ pour la fabrication d'une scie à ruban ou d'une lame de scie d'un acier élastique d'une résistance tenace, dans laquelle les dents de scie présentent des zones de pointes de dent d'une matière dure, résistante à l'usure, **caractérisé en ce, que** le produit de départ (1) est formé d'un ruban d'acier (2), qui, au côté frontale, à une surface plate de base (31) à ces places, qui forment les pointes de dent (41) dans la scie fabriquée (4) ou le ruban de scie, porte des parties (3) d'une matière de coupe, et que le joint (31) entre le ruban d'acier (2) et les parties (3) d'une matière de coupe est formé comme soudage par bombardement électronique sans supplément d'une matière d'addition de soudage, ou comme soudage à laser ou comme soudage par effet Joule avec pression.

2. Produit de départ selon la revendication 1, **caractérisé en ce, que** les parties (3) d'une matière de coupe, à la face frontale, sont au moins partiellement foncées dans le ruban d'acier (2).

3. Produit de départ selon une quelconque des revendications 1 ou 2, **caractérisé en ce, que** la largeur du ruban d'acier (2) est plus grande que 15 mm, de préférence plus grande que 40 mm.

4. Procédé pour la fabrication d'un produit de départ pour une lame de scie ou une scie à ruban, qui présente des dents de scie ayant des zones de pointes de dent d'une matière dure, résistante à l'usure, **caractérisé en ce, que** l'on met des parties de matière de coupe, sans fente, au côté frontal d'un ruban d'acier contre ceux places, dans les zones desquelles des pointes de dent sont prévues à la lame de scie, et que l'on les relie avec ceux-ci par soudage, le soudage des parties de matière de coupe avec le ruban d'acier étant effectué sans supplément d'une matière d'addition de soudage au moyens de soudage par bombardement électronique, de soudage à laser ou de soudage par effet Joule avec pression.

5. Procédé selon la revendication 4, **caractérisé en ce, que** des approfondissements sont introduits dans le ruban d'acier au côté frontal, après quoi une introduction des parties de matière de coupe dans ceux-ci, une mise en contact sans fente de celui-ci et un soudage avec le ruban d'acier sont effectués.

6. Procédé selon une quelconque des revendications 4 ou 5, **caractérisé en ce, que** la longueur des approfondissements au côté frontal dans le ruban d'acier et/ou la longueur des parties individuelles de matière de coupe et/ou la distance mutuelle de ceux-ci, avec laquelle elles sont liées au côté frontal avec le ruban d'acier, est (sont) prévues en correspondance avec le profil de dent prévu de la scie.

7. Procédé selon une quelconque des revendications 4 à 6, **caractérisé en ce, que** l'on guide un ruban d'acier et, en séquence, on met, respectivement, en contact les parties de matière de coupe aux places prévues et on le soude avec ce-ci.
